# EUROPÄISCHE PATENTSCHRIFT

(11) **EP 0 903 260 B1**
(45) Veröffentlichungstag und Bekanntmachung des Hinweises auf die Patenterteilung: **21.03.2001**
(21) Anmeldenummer: 97203673.5
(22) Anmeldetag: 28.11.1997
(51) Int. Cl.: B60L 13/03, B61L 27/04

(54) **Spurgeführter selbstangetriebener Containertragwagen**
Track guided self-driven container wagon
Wagon porte-container autopropulsionné

(43) Veröffentlichungstag der Anmeldung: 24.03.1999
(73) Patentinhaber: Technische Universiteit Delft, 2628 BL Delft (NL)
(72) Erfinder: Hansen, I. A., 2611 EH Delft (NL)
(74) Vertreter: Prins, Adrianus Willem

(56) Entgegenhaltungen:
- EP-A- 0 132 934
- EP-A- 0 642 967
- GB-A- 1 117 681

## Beschreibung

Die Erfindung bezieht sich auf Eisenbahngüterwagen, die mittels Linearmotor angetrieben zum Transport von Containern verwendet werden. Der Linearmotor wird als Langstator ausgebildet, welcher als Statorwicklung im Gleisbett eingebaut und durch Anbringung einer aluminiumbeschichteten Reaktionsschiene unter dem Drehgestell des Güterwagen hergestellt wird. Das Rangieren von konventionellen Eisenbahngüterwagen in Containerumschlaganlagen, Güterbahnhöfen und Industriegleisen mittels Lokomotive bzw. Schwerkraft am Ablaufberg wird durch selbstangetriebene Güterwagen ersetzt.

Gegenstand der vorliegenden Erfindung ist ein Containertragwagen, der zum Transport von Containern auf Hafenbahngleisen und zwischen Containerbahnhöfen sowie auf Industriegleisen eingesetzt wird. Diese Tragwagen sind generell ohne Antrieb ausgerüstet und müssen daher mittels Lokomotiven bzw. Unimog rangiert werden. Das von CIMARRON TECHNOLOGY LTD vorgestellte Transportsystem (EP-A-0 132 934) ist dadurch gekennzeichnet, daß der Antrieb über dem Drehgestells des Güterwagens angebracht ist und der Container unter dem Tragwagen hängt.

Selbstangetriebene spurgeführte Wagen gibt es bereits bei Personenbeförderungssystemen, wobei der Antrieb i.d.R. aus Gleichstrom- oder Drehstromrotationsmotoren besteht und die Stromversorgung mittels Oberleitung oder 3. Schiene erfolgt. Linearmotoren sind bislang nur vereinzelt in Nahverkehrssystemen angewendet worden, z.B. beim SkyTrain in Vancouver als Kurzstator, beim WEDWAY System auf dem Flughafen Houston als Langstator und bei der inzwischen wieder abgebauten M-Bahn in Berlin ebenfalls als Langstator. Der TRANSRAPID als Hochgeschwindig-keitsschwebebahn besitzt ebenfalls einen Langstatormotor. Das von TELETRANS CORPORATION (GB-A-1 117 681) vorgestellte System wird durch einen Langstator angetrieben und besitzt zylindrische Radsätze mit einem U-förmigen Profil und zwei außen angeordneten Spurkränzen, welche auf einem C-förmigen Schienenprofil abrollen und in Weichen mittels eines am Wagendach befestigten Lenkers einseitig angehoben werden.

Die Entwicklung von selbstangetriebenen Gütertransportwagen mittels Linearmotor ist bislang in Ansätzen steckengeblieben und weltweit ist kein Einsatz im Zusammenhang mit dem Transport von Containern bei bestehenden Eisenbahnen bekannt.

Der Vorteil eines durch Linearmotor angetriebenen Containertragwagens liegt darin, daß zum Rangieren in Güterbahnhöfen, Containerumschlaganlagen und Industriegleisen keine Lokomotive und kein Rangierpersonal benötigt wird. Die Zugbildung wird wesentlich vereinfacht, da die selbstangetriebenen Tragwagen mittels Stellwerk direkt in die Richtungs- oder Ladegleise fahren und diese ohne Umfahrungsgleis für die Rangierlokomotive wieder verlassen können. Durch den Einsatz selbstangetriebener Gütertragwagen werden aufwendige Rangierbahnhöfe mit Ablaufberg und Abdrücklokomotive sowie Gleisbremsen überflüssig, da die selbstangetriebenen Tragwagen nach der Fahrstraßeneinstellung das jeweilige Zielgleis und den Halteplatz selbständig finden und eine automatische Kupplung der Waggons mittels der neuentwickelten Z-AK stattfinden kann.

Der Vorteil des Langstatormotors liegt darin, daß der technische und finanzielle Aufwand zum Um- oder Neubau von Containertragwagen minimal ist, so daß die Investitionen in das rollende Material beschränkt werden. Demgegenüber erfordert der Langstator einen höheren Aufwand bei der streckenseitigen Ausrüstung mit einem Wanderfeld. Diese ist jedoch im Falle von Rangierbahnhöfen und Containerumschlaggleisen auf relativ kurze, jedoch intensiv genutzte Gleise begrenzt.

Ziel der Erfindung ist ein Containertragwagen, der auf Rangier- und Umschlaggleisen einzeln mittels Selbstantrieb befördert sowie auf Streckengleisen im Zugverband gekuppelt durch eine Lokomotive gezogen wird. Dieses Ziel wird durch die Merkmale des Anspruchs 1 erreicht. Der Container kann dann mit einmaligem vertikalen Umschlag zwischen Seeschiff und Eisenbahn direkt und ohne Zwischenlagerung auf dem Seeterminal befördert werden, so daß eine durchgehende An- und Abfuhr von Containern im kombinierten Verkehr Seeschiff-Schiene möglich ist.

Die Erfindung besteht aus der Herstellung eines Selbstantriebes von schienengebundenen Containertragwagen in Form eines Linearmotors durch den Einbau eines Wanderfeldstators im Gleisbett und die Befestigung eines aluminiumbeschichteten Stahlbleches, das als Reaktionsschiene dient, unter den Drehgestellen des Tragwagens.

Der entscheidende, materielle Vorteil des Einsatzes von selbstangetriebenen Containertragwagen ergibt sich daraus, daß diese ohne weiteres in einen lokbespannten Güterzug eingestellt und über große Entfernungen befördert werden können, ohne daß die Container am Ausgangs- oder Zielbahnhof mittels Vertikalumschlaggerät auf ein anderes Fördermittel für den Terminaltransport zwischen landseitigen Ladegleisen und seeseitigen Kränen umgeladen werden müssen. Durch den direkten Weitertransport der Container mittels schienengebundener, selbstangetrieber Tragwagen von und zu den Seekränen am Kai können der Zwischentransport zum maritimen Containerstack und die dortige Zwischenlagerung entfallen. Dadurch wird eine signifikante Erhöhung der Flexibilität des Containertransportes mittels Eisenbahngüterwagen in Seehäfen, Rangier- und Containerbahnhöfen erreicht.

Die Einsparungen beim Bau und Betrieb von Portalkränen über den landseitigen Ladegleisen sowie von Rangierlokomotiven und -personal, die Verminderung der Umschlagbewegungen im maritimen Terminal, die Verringerung der Containerlagerfläche und die Erhöhung der Durchlaufgeschwindigkeit der Container im kombinierten Verkehr See-Schiene durch den Einsatz der selbstangetriebenen Tragwagen wiegen die Investitionskosten in den Linearmotor bei den Tragwagen und dem Wanderfeldstator in den Terminalgleisen bei weitem auf.

Im folgenden wird die Erfindung anhand eines Beispiels und mit Bezug auf die beiliegenden Zeichnungen näher erläutert, wobei
Abbildung 1 in Draufsicht und Querschnitt die erfindungsgemäße Anbringung der Reaktionsschiene des Linearmotors unter dem Eisenbahn-Containertragwagens darstellt und
Abbildung 2 in Draufsicht und Querschnitt die erfindungsgemäße Anordnung eines Wanderfeldstators im Gleisbett zeigt.

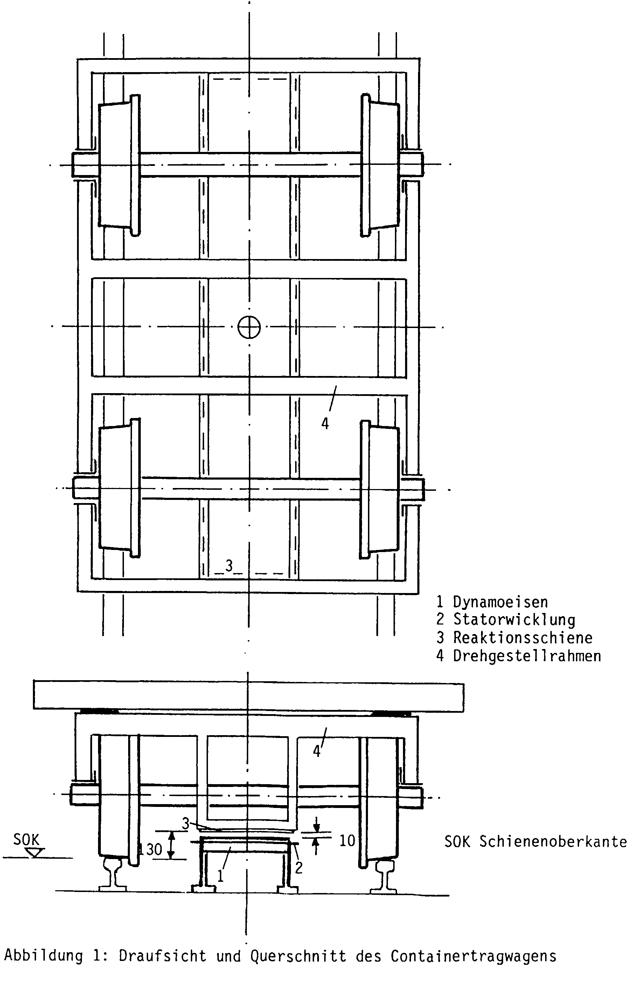

In Abbildung 1 ist die Reaktionsschiene, bestehend aus einem Stahlblech, das auf der Unterseite mit Aluminium beschichtet ist, zu sehen. Dieses ist mittels stählerner Profilstäbe und -träger mittig und biegesteif am Drehgestellrahmen aufgehängt. Die lichte Höhe zwischen Schienenoberkante und Unterkante der Reaktionsschiene im beladenen Zustand des Tragwagens beträgt 130 mm, so daß die bei UIC-Bahnen geltende Begrenzungslinie für rangiertechnische Einrichtungen im Gleisbett von 125 mm über Schienenoberkante nicht verletzt wird.

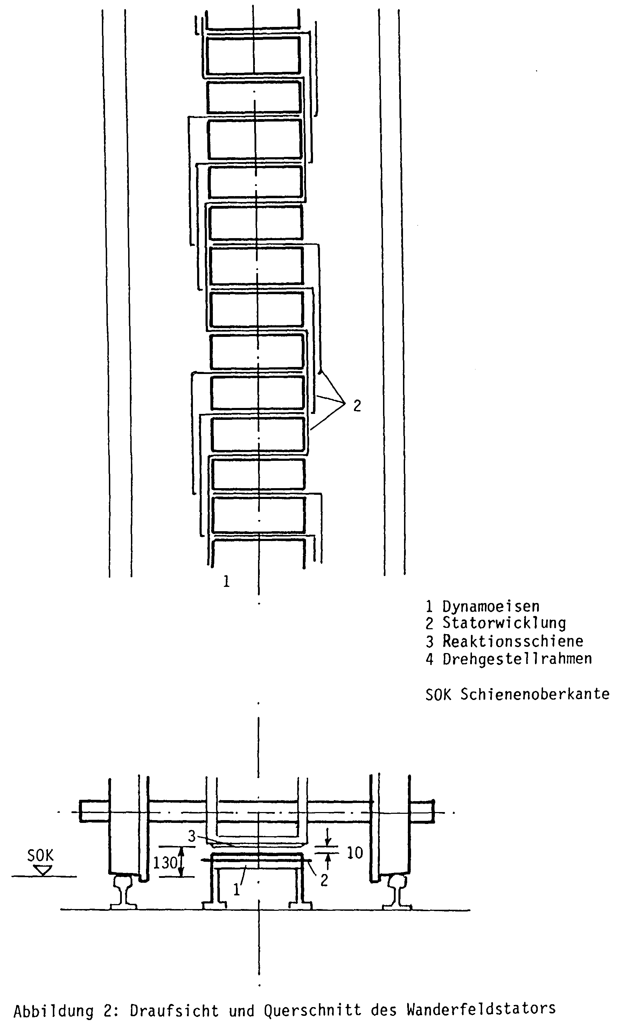

In Abbildung 2 ist die Anbringung des Wanderfeldstators im Gleisbett dargestellt. Dieser besteht aus einer dreisträngigen Wicklung von stromdurchflossenen Leitern, die in den Quernuten eines geblechten Dynamoeisens, welches mittig auf den Querschwellen des Gleises befestigt ist, liegen. Die Oberkante des Langstators wird auf 120 mm über Schienenoberkante nivelliert, so daß sich bei Überfahrt des Tragwagens der Norm-Luftspalt von 10 mm ergibt, bei dem die benötigte magnetische Antriebskraft erzeugt wird. In Weichenbereichen und bei Überwegen wird der Wanderfeldstator auf begrenzter Länge unterbrochen. Der Tragwagen wird dann mittels Schwung und der Antriebskraft, die auf die Reaktionsschiene des anderen Drehgestells ausgeübt wird, weiterbefördert.

Die Beschleunigung, das Bremsen und Anhalten des Tragwagens auf beliebigen Abschnitten der Rangier- und Ladegleise erfolgt durch ein elektromagnetisches Wanderfeld, das durch den von einem ortsfesten Pulsumrichter erzeugten Drehstrom in den Kabelwicklungen des Langstators erzeugt wird. Die Stromeinspeisung in die einzelnen Wanderfeldabschnitte beginnt erst, sobald der Tragwagen in den betreffenden Abschnitt einfährt und endet, wenn der Tragwagen stillsteht bzw. den Abschnitt verlassen hat.

Die Statorwicklung wird ortsabhängig dimensioniert in Abhängigkeit von der im jeweiligen Abschnitt benötigten Schubkraft, der geplanten Gerschwindigkeit und der Anzahl der Tragwagen in einem Abschnitt.

## Patentansprüche

1. Schienengebundener Güterwagen mit Linearmotorantrieb bestehend aus Langstator (2) im Gleis und Reaktionsschiene (3) am Wagen, dadurch gekennzeichnet, daß die Reaktionsschiene (3) mittels Profilstäbe und -träger mittig und biegesteif unter dem Drehgestellrahmen (4) des ausgestalteten Güterwagens angeordnet ist.

2. Automatisches Rangieren eines Güterwagens nach Anspruch 1 in Containerterminals, Rangier- und Umschlagbahnhöfen sowie Industriegleisen.

## Claims

1. A linear motor-driven track-bound goods wagon comprising a long stator (2) in the track and a reaction rail (3) on the wagon, characterized in that the reaction rail (3) is disposed by means of sectional bars and beams under the bogie frame (4) of the developed goods wagon at the center and with flexural stiffness.

2. The automatic shunting of a goods wagon according to claim 1 in container terminals, shunting and transfer stations as well as industrial sidings.

## Revendications

1. Wagon à marchandises ferroviaire commandé par moteur linéaire, comprenant un stator long (2) dans la voie et un rail de réaction (3) sur la voiture, caractérisé en ce que le rail de réaction (3) est disposé au moyen de barres et poutres profilées sous le châssis du boggie (4) du wagon à marchandises développé au centre et avec rigidité à la flexion.

2. Manoeuvres automatiques d'un wagon à marchandises selon la revendication 1 dans les terminaux à containers, gares de manoeuvre et gares de transbordement ainsi que sur les voies industrielles.
